Europäisches Patentamt

European Patent Office

Office européen des brevets

(19)

(11) Publication number : **0 518 628 A1**

(12) **EUROPEAN PATENT APPLICATION**

(21) Application number : **92305304.5**

(22) Date of filing : **10.06.92**

(51) Int. Cl.$^5$ : **B32B 31/06, B31D 3/00**

(30) Priority : **14.06.91 US 715442**

(43) Date of publication of application :
**16.12.92 Bulletin 92/51**

(84) Designated Contracting States :
**AT BE CH DE DK ES FR GB GR IT LI LU MC NL PT SE**

(71) Applicant : **Liebel, Henry L**
**10 Tower Drive**
**Newport, Kentucky 41071 (US)**

(72) Inventor : **Liebel, Henry L**
**10 Tower Drive**
**Newport, Kentucky 41071 (US)**

(74) Representative : **Findlay, Alice Rosemary**
**Lloyd Wise, Tregear & Co. Norman House**
**105-109 Strand**
**London WC2R 0AE (GB)**

(54) **Composite article made from used or surplus corrugated boxes.**

(57)   A composite article formed of multiple pieces (10) or strips cut from scrap corrugated boxes overlying each other to a desired thickness and being adhered together. The article is formed as an endless length on a conveyor from which pieces of a desired size are cut.

FIG. I

EP 0 518 628 A1

## Background Of The Invention

In today's environment, it is generally recognized to be desirable to recycle as many materials as possible. These include, for example, glass, metals such as aluminum and steel, and paper goods, for example, used newspaper and corrugated boxes. In recycling of corrugated boxes, it is well known to pulp them and put them through the paper making and corrugating process. However, such a method of recycling is both energy intensive and relatively expensive. If the market for used or surplus corrugated is not economically justified, there is little incentive for recycling the corrugated.

At the same time, it is known that a number of insulative materials made from organic feedstocks are detrimental to the environment in that they do not readily decompose. One of these material is Styrofoam which is often used both as an insulative material and as a cushioning packing material for absorbing impacts and shocks during shipment of articles contained in boxes and the like.

## Summary Of The Invention

It is among the principal objects of this invention to provide an improved composite article of construction from used or surplus corrugated boxes which eliminates the need for repulping of the used corrugated boxes. It is further an object of this invention to provide an improved composite article of construction made from used or surplus corrugated boxes which can be substituted for Styrofoam and other plastic articles in a number of applications requiring insulation and/or cushioning thereby eliminating use of such plastic materials.

To this end, the present invention is predicated on the discovery that an improved article of construction may be formed from taking used, scrap, or surplus corrugated boxes, slitting them into strips and then slitting the strips at right angles to form multiples of essentially square pieces of used corrugated boxes. These pieces are then stacked one upon another as layers on a sheet of facing material, which may be paper or corrugated, sprayed with glue, and adhered together. A second outer facing sheet is applied to the stacked layers of scrap corrugated pieces. The endless length of material is then trimmed along its side edges to form generally uniform straight side edges. The material may be cut into blocks or other desired articles comprised of multiple layers of scrap corrugated boxboard layered and adhered to each other with facing sheets on either side providing a smooth outer surface.

In another embodiment, used or scrap corrugated boxes are slit into strips in a direction perpendicular to the direction of the flutes. The strips are stood on edge on a conveyor in overlapping relation and adhered together to form an endless length of material wherein the flutes are aligned in a single direction. Articles of a desired size may then be cut from the endless length of material to take advantage of the compressive strength of the corrugated in the flute direction.

The articles made from scrap corrugated boxes have a number of applications which include cores for hollow doors and building panels, packing and cushioning panels inside of boxes and corrugated containers, roll positioners, thick-walled drums and cores, pallets, and insulated containers.

## Brief Description Of The Drawings

Fig. 1 is an isometric schematic illustration showing the method of manufacture of the composite article of the present invention.

Fig. 2 is a cross-sectional view taken along line 2-2 of Fig. 1.

Fig. 3 is a pictorial illustration of the application of the composite article as a roll positioner.

Figs. 4A and 4B are schematic illustrations of the application of the article as a thick-walled drum or core.

Fig. 5 is a schematic illustration of the application of the article as a pallet.

Figs. 6A and 6B are schematic illustrations of the application of the article as an insulated container.

Fig. 7 is a plan view of a scrap corrugated box in a flattened condition.

Fig. 8 is an isometric schematic illustration showing the method of manufacture of a second embodiment of the invention.

Fig. 9 is an isometric schematic illustration of the composite article in accordance with a second embodiment of the invention.

## Detailed Description Of The Invention

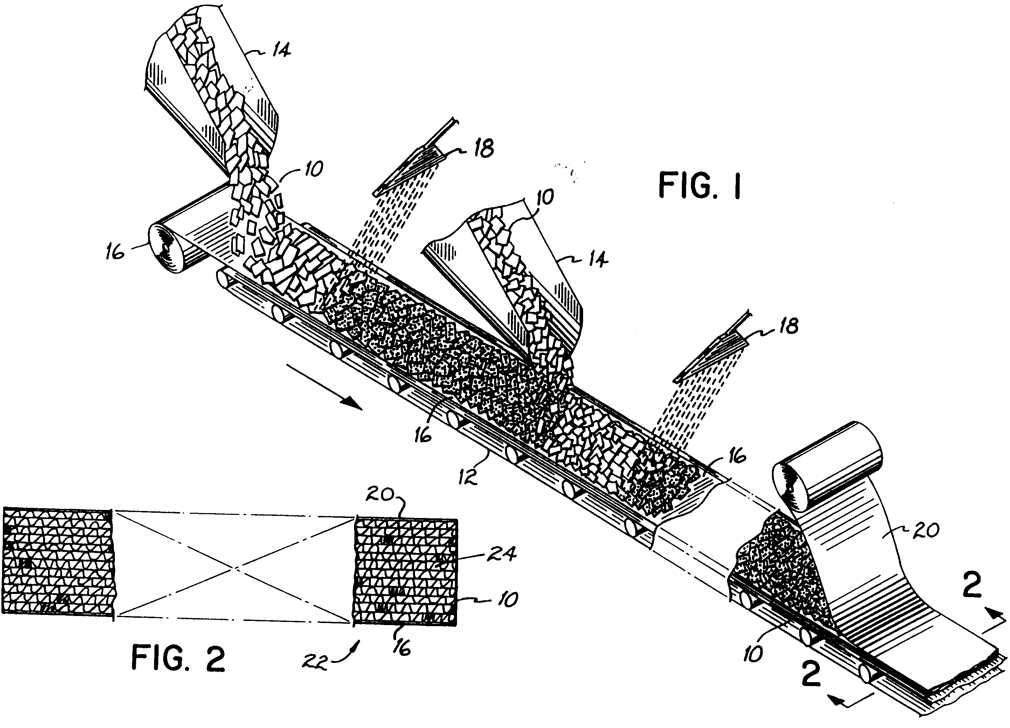

Referring first to Fig. 1, in the method of manufacture of the composite article of the present invention, used, scrap, or surplus corrugated boxes are first gathered, flattened, and put through a slitter to cut the boxes into strips of a desired width which, in a presently preferred form of the invention, may be on the order of four to five inches. These strips are then put through a second slitter where they are cut at right angles to form roughly square corrugated pieces 10 on the order of four to five inch squares. Thus, for example, corrugated boxes of a standard dimension of 16″ x 11″ x 10″ can be cut into the pieces of the described dimensions. These are only rough dimensions since because of the non-uniformity of scrap boxes, the pieces produced may likewise be non-uniform. However, they may nevertheless be used in making the composite article of this invention.

Once cut, the pieces 10 may be placed in feed bins (not shown) above a conveyor 12, the bins having discharge chutes 14 for distributing the corrugated pieces 10 on the conveyor 12. A roll of facing material 16, which may be a suitable material such as paper, paperboard, or corrugated is provided and is discharged as an endless length supported by the conveyor 12. The cut pieces 10 of used corrugated are dispensed from chutes 14 and laid down on the paper facing sheet from the feed bins across the width of the sheets. A number of discharge chutes 14 can be placed along the length of the conveyor 12 to build up as many layers of pieces 10 of used corrugated as desired. That is, if three layers of used corrugated pieces 10 are desired, three feed chutes 14 may be placed along the length of the conveyor 12. If a thicker article is desired, additional feed chutes 14 may be used to build up the additional layers.

Spray nozzles 18 are located between the chutes 14 to spray a glue on the already deposited pieces such that when that previously deposited pieces 10 pass under the succeeding feed chute 14, the pieces 10 deposited thereon are adhered to the underlying pieces. Glue may be sequentially sprayed as the layers are built up to adhere each newly-applied layer to the underlying layer. In addition to glue being sprayed on the corrugated pieces 10 to adhere the pieces together, in the manufacturing process, the corrugated pieces 10 may be sprayed with an antibiotic or antibacterial material to prevent biological degradation or attack of the corrugated.

Rollers located between chutes 14 may be employed to apply pressure to the deposited layers to aid in laminating the layers together.

Once the desired number of layers are built up, a second facing sheet 20 is applied to the top of the continuously moving sheet and adhered thereto. The endless length of material is then trimmed along its side edges by side slitters (not shown) to even the edges, it being appreciated that in the manufacturing process the edges are likely to be uneven as the corrugated pieces 10 are distributed across the facing sheet 16. Trimming, for example, slitting several inches in from the edges assures a clean, even face on each side edge. The trimmed material may now be cut crosswise at whatever position is desired to form blocks of the composite material for appropriate application. For example, if the material is to be used as a core for a hollow door, it might be formed on the order of ½ to 3/4 inch thick and cut into panel sections on the order of 3' x 6' to fit inside of a panel door. In contrast, if the composite material is to be used in packing of smaller articles, smaller pieces could be cut. In any event, as shown in Fig. 2, the composite article 22 once trimmed and cut comprises a core 24 of layers of pieces 10 of corrugated board cut from used corrugated boxes which are layered upon each other and adhered together and to outer facing sheets 16 and 20 on either side of the core 24 providing a smooth outer surface.

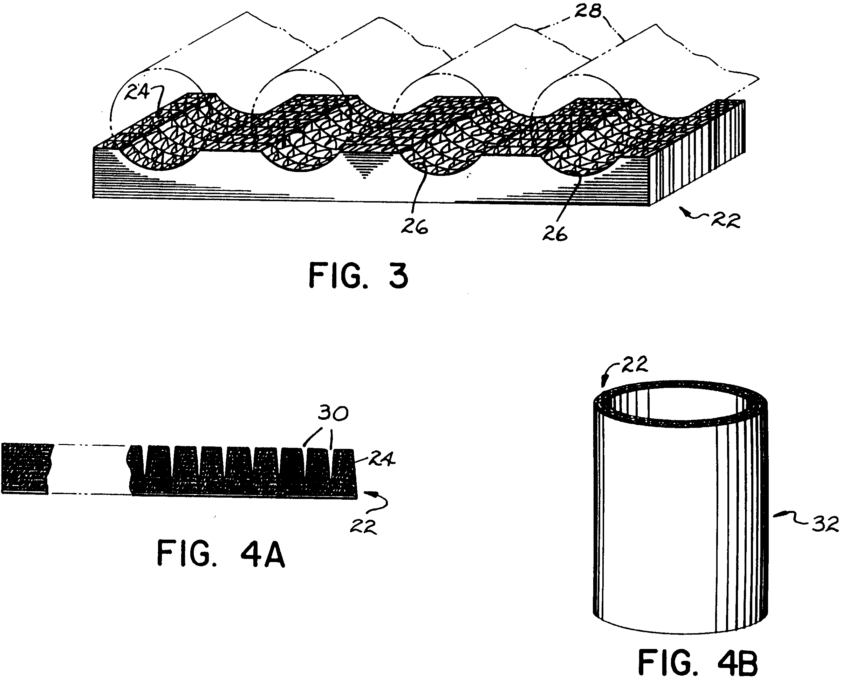

Referring now to Fig. 3, the composite article 22 may be used in a number of applications. For example, the material may be further cut to define spaced arcuate depressions 26 which could hold rolls 28 of material such as rolls of paper to keep them from rolling during transit.

Referring to Figs. 4A and 4B, a slab of material 22 exiting the conveyor shown in Fig. 1 could be cut to provide a series of V's 30 such that the material 22 could be formed into a cylinder 32 (Fig. 4B) to form a thick-walled drum or core.

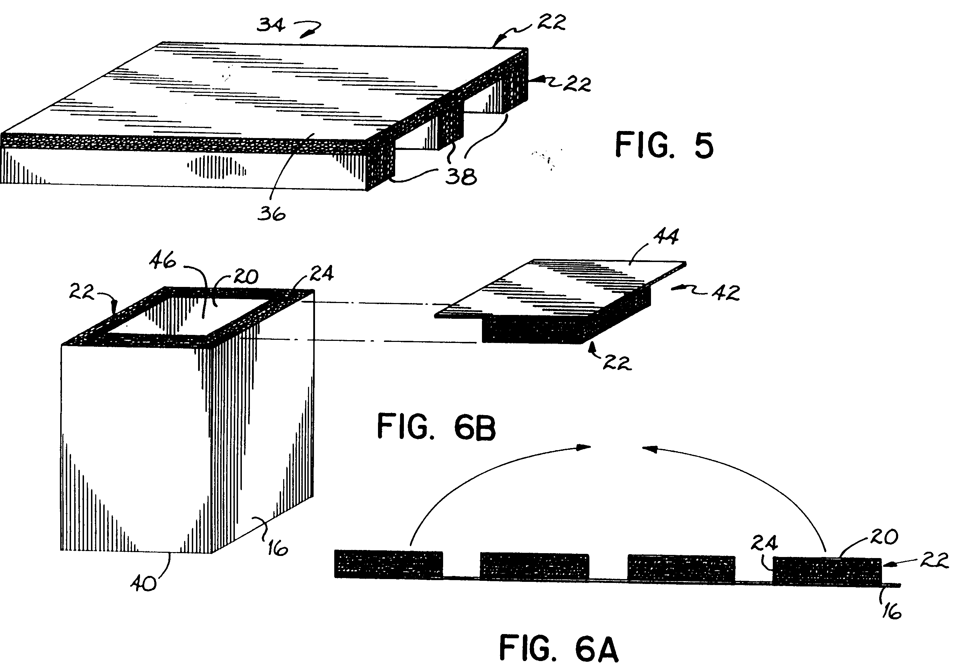

Referring to Fig. 5, blocks of the composite material 22 may be cut in different dimensions and then adhered together to form a pallet 34. Such a pallet has a flat top member 36 for supporting a load and having the facing sheets 16 and 20 on either side thereof of the composite core 24. The top member 36 is then supported by a plurality of composite material blocks 38 which permit the tines of a forklift truck to enter therebetween to lift the pallet 34 and load supported thereon.

Referring now to Figs. 6A and 6B, the composite material 22 may be cut through one facing sheet 20, through the core 24, and down to the opposed facing sheet 16 to form spaced segments which may be folded together to form a container 40 shown in Fig. 6B. A cap 42 for the container 40 may be formed by adhering a facing sheet 44 to a block 22 of composite material such that the composite block 22 fits down into the top opening 46 of the container 40 with the facing sheet 44 contacting the top edges and supporting the cap 42 therein. A like bottom cap may also be formed. Because the composite material may be formed to a desired thickness and because the corrugated board from which the composite is made is a low heat conducting material, the composite material may be formed into an ideal insulated material of thick walls and low heat conduction.

In addition to the embodiments shown in Figs. 3-6, the composite material of the present invention may also be used as packing and cushioning units inside of boxes and corrugated containers or other containers essentially in any application where Styrofoam or other plastic packing material is now used.

The core 24 provides an ideal cushion in the direction perpendicular to the facing sheets 16, 20 as well as relatively high compression resistance in the direction perpendicular to the side edges of the composite.

The composite material may be formed in any desired thickness, 3/4 inch to 1 foot in thicknesses being presently contemplated. Further, in addition to the material being supplied from supply bins as shown in Fig. 1, a vacuum belt could be used to pick up flat pieces 10 and apply them as a layer to an underlying facing sheet 16 or previously deposited layer.

In the embodiment described above, the scrap boxes are cut into squares, and the squares are more or less randomly deposited on the underlying facing material or previously applied layer of corrugated scrap pieces. As a result, there is no particular orientation of the flutes of the scrap corrugated pieces in the finished product. Rather, the flutes are likely to be at various orientations. However, in some applications, it may be desired to orient the direction of flutes of the scrap corrugated pieces to take advantage of the known increased compressive strength of corrugated board in the flute direction.

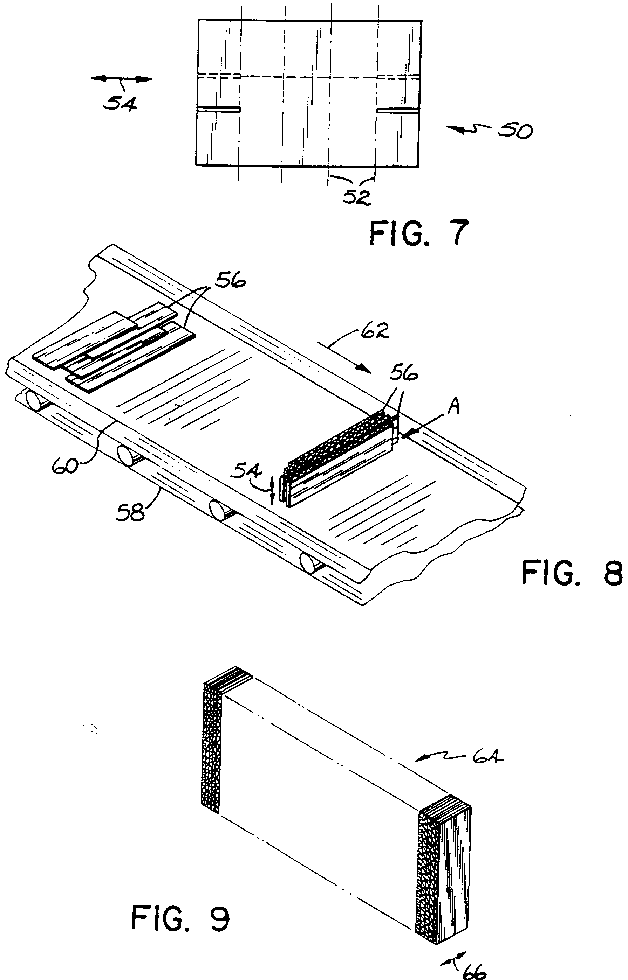

Referring to Figs. 7-9, in this embodiment scrap boxes 50 are flattened and cut in 4 to 8 inch wide strips along lines 52 in a direction perpendicular to the flute direction (arrow 54). However, the slit pieces are not then cut in a direction parallel to the flute direction. Rather, the pieces 56 are then conveyed to a conveyor 58 wherein they are arrayed on an underlying moving surface 60 with the flutes extending in the direction of travel of the conveyor (arrow 62). Surface 60 may be a paper sheet intended to form a part of the composite article or may be a conveyor belt which supports the pieces 56 but does not become part of the article. At a point (A) along the conveyor 58 length, the strips 56 are caused to be stood on end such that the flutes now are perpendicular to the underlying paper sheet 60. Either before or at point A in the operation, the faces of the corrugated strips 56 may be sprayed with a glue as described above whereby the strips are caused to overlap one another and are glued together to form an endless length of composite article on the conveyor 58. This endless length of material may then be cut perpendicular to the direction of conveyor travel (arrow 62) into articles 64 of desired size having all of the flutes aligned and running in a preferred direction (arrow 66), as illustrated in Fig. 9. As may seen the composite article then has aligned flutes and may be used in applications wherein the greatest compressive forces are applied in the flute direction, i.e., the direction of the arrow 66, to give increased resistance to those compressive forces.

In any of the embodiments described above, it is not necessary that the scrap pieces be adhered to facing sheets of paper. Rather, there may be applications where it is desired that the scrap pieces be adhered to each other but otherwise not to a facing sheet.

## Claims

1. A material of construction comprising multiple layers of pieces of corrugated board cut from scrap corrugated boxes, said pieces being layered upon each other and adhered together.

2. The material of construction of Claim 1 further comprising a facing sheet on at least one side of said material providing a smooth outer surface.

3. The material of construction of Claim 2 wherein said facing sheet is a sheet of paper.

4. The material of construction of Claim 2 wherein said facing sheet is a sheet of corrugated board.

5. The material of construction of Claim 1 wherein said pieces of corrugated board are on the order 5 inches square.

6. The material of construction of Claim 1 wherein said material has a thickness on the order of about ¾ inch to about 1 foot thick.

7. A material of construction comprising multiple strips of corrugated board cut from scrap corrugated boxes, said strips overlapping one another and being laminated together with the flutes of the corrugated strips being aligned in a single direction.

FIG. 1

FIG. 2

FIG. 3

FIG. 4A

FIG. 4B

FIG. 5

FIG. 6B

FIG. 6A

EP 0 518 628 A1

FIG. 7

FIG. 8

FIG. 9

**European Patent Office**

## EUROPEAN SEARCH REPORT

Application Number

EP 92 30 5304

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 519 528 (C A FOURNESS)<br>* column 1, line 30 - line 35 *<br>* column 1, line 72 - line 18 *<br>* column 2, line 65 - column 3, line 57 *<br>* column 4, line 7 - line 12 *<br>* column 5, line 11 - line 49; figures 1,6 * | 1-3 | B32B31/06<br>B31D3/00 |
| X | GB-A-675 790 (J KLEPESTA)<br>* the whole document * | 7 | |
| X | DE-A-355 056 (R HÖFLER)<br>* the whole document * | 7 | |
| Y | EP-A-0 262 898 (HOWARD CITY PAPER)<br>* column 3, line 11 - column 4, line 65; figure 1 * | 1-3 | |
| Y | Section Ch, 6 December 1983<br>Derwent Publications Ltd., London, GB;<br>Class C, Page 198, AN 7273<br>& JP-A-58 152 083 (MASAHARU TANABE) 9 September 1983<br>* abstract * | 1-3 | TECHNICAL FIELDS SEARCHED (Int. Cl.5) |
| A | Section Ch, 6 December 1990<br>Derwent Publications Ltd., London, GB;<br>Class M, Page 1055, AN 014549<br>& JP-A-2 233 354 (FUJIO TERAMATSU) 14 September 1990<br>* abstract * | 1-3 | B32B<br>B31D<br>D21H |
| A | US-A-2 543 101 (C S FRANCIS)<br>* column 3, line 57 - line 75 *<br>* column 4, line 27 - line 41 *<br>* column 5, line 28 - line 34 *<br>* column 9, line 55 - column 10, line 64; figures 1,2 * | 1-4 | |

The present search report has been drawn up for all claims

| Place of search | Date of completion of the search | Examiner |
|---|---|---|
| THE HAGUE | 29 SEPTEMBER 1992 | PHILPOTT G.R. |

EPO FORM 1503 03.82 (P0401)